# EUROPÄISCHE PATENTSCHRIFT

(11) **EP 0 707 377 B1**
(45) Veröffentlichungstag und Bekanntmachung des Hinweises auf die Patenterteilung: **22.07.1998**
(21) Anmeldenummer: 95202704.3
(22) Anmeldetag: 09.10.1995
(51) Int. Cl.: H02M 3/335

(54) **Stromversorgungseinrichtung**
Current supply device
Dispositif d'alimentation de courant

(30) Priorität: 13.10.1994 DE 4436553
(43) Veröffentlichungstag der Anmeldung: 17.04.1996
(73) Patentinhaber: Philips Patentverwaltung GmbH, 22335 Hamburg (DE); Philips Electronics N.V., 5621 BA Eindhoven (NL)
(72) Erfinder: Bressler, Johann, D-22335 Hamburg (DE)
(74) Vertreter: Poddig, Dieter, Dipl.-Ing.

(56) Entgegenhaltungen:
- DE-A- 3 121 638
- US-A- 5 144 203

## Beschreibung

Die Erfindung bezieht sich auf eine Stromversorgungseinrichtung mit einer zwischen zwei mit einer Versorgungsspannung beaufschlagbaren Anschlüssen angeordneten Reihenschaltung aus einer Induktivität, einer von einer Steuerschaltung getakteten Schalteinrichtung und einer Strommeßimpedanz, mit einem Eingangswiderstand, über den eine an der Strommeßimpedanz auftretende Spannung einem Eingang der Steuerschaltung zum Steuern der Schalteinrichtung zuführbar ist, und mit einer Kapazität parallel zum Eingang der Steuerschaltung.

Aus der englischsprachigen Kurz zusammenfassung der japanischen Druckschrift 63-305755 (A) vom 13.12.1988 ist eine Steuerschaltung für ein Schaltnetzteil bekannt, die eine Treiberschaltung für ein Pulsweitensteuersignal von der Steuerschaltung, einen Transformator, einen Leistungs-MOS-FET und einen Steuersignal-Erzeugungsschaltkreis umfaßt, der ein Steuersignal erzeugt. Die Steuerschaltung ist gebildet aus mit einem Komparator, einem Quasi-Tra pezwellengenerator und einer Referenzquelle. Der Quasi-Trapezwellengenerator empfängt eine Referenzspannung und erzeugt ein quasi-trapezförmiges Signal, das als Referenzsignal verwendet wird. Die dargestellte Schaltungsanordnung umfaßt einen Widerstand, der zwischen den Leistungs-MOS-FET und Erde geschaltet ist. Am Verbindungspunkt zwischen dem Leistungs-MOS-FET und dem Widerstand ist die Anode einer Diode angeschlossen, deren Kathode über einen Kondensator mit Erde verbunden ist. Außerdem ist die Kathode der Diode über einen weiteren Widerstand mit Erde und unmittelbar mit einem Eingang des Komparators verbunden. Die Widerstände, der Kondensator und die Diode bilden einen Steuersignal-Erzeugungskreis, der aus einer am erstgenannten Widerstand auftretenden Spannung, die durch den Strom durch den Leistungs-MOS-FET entsteht, eine Gleichspannung erzeugt, die als Steuersignal dem Komparator zugeleitet wird. Außerdem wird vom Quasi-Trapezwellengenerator ein trapezförmiges Signal dem Komparator zugeführt. Der Komparator gibt ein PulsweitenSteuersignal ab. Dementsprechend verringert sich die Impulsbreite des Pulsweiten-Steuersignals drastisch, wenn das Steuersignal von der Steuerschaltung für das Schaltnetzteil größer wird als der Spitzenpegel der Quasi-Trapezwelle. Dadurch soll in einem Ausgangsstrom eine hinreichend abfallende Charakteristik erreicht werden.

Aus der englischsprachigen Kurzzusammenfassung der japanischen Druckschrift 61-293165 (A) vom 23.12.1986 ist ein Überstrom-Schutzschaltkreis für einen Schaltregler bekannt. Dieser umfaßt einen Glättungskondensator, der mit einer Wechselspannungsquelle verbunden ist. Das Ausgangssignal dieses Glättungskondensators wird der Reihenschaltung zwischen der Primärwicklung eines Transformators und einem Schalttransistor zugeführt, so daß das erwünschte Ausgangssignal an der Sekundärwicklung des Transformators abgegriffen werden kann. Ein Stromdetektionswiderstand ist in Reihe mit dem Transistor geschaltet. Das detektierte Ausgangssignal des Stromdetektionswiderstands wird einem weiteren Transistor zum Überstromschutz zugeführt. Diese Zuführung erfolgt über ein Netzwerk, welches in Reihe eine Längsinduktivität und einen Längswiderstand aufweist, und, parallel zum Eingang des weiteren Transistors, die Parallelschaltung eines weiteren Widerstands und einer Kapazität. Durch diese Schaltungsanordnung, insbesondere die genannte Längsinduktivität, sollen hochfrequente Störungen im detektierten Strom aus dem Stromdetektionswiderstand verringert werden und somit eine Fehlfunktion vermieden werden.

Bei den bekannten Schaltungsanordnungen wird somit die Übertragung von Störungen von der Strommeßimpedanz an die Steuerschaltung durch Netzwerke erreicht, die entweder nur eine Gleichspannung oder nur niederfrequente Spannungsanteile weiterleiten, hochfrequente Anteile dagegen dämpfen oder unterdrücken. Dadurch können auch sehr kurzzeitige, parasitäre Spannungsspitzen gedämpft werden. Die hohe Dämpfung hat jedoch zur Folge, daß im Kurzschlußfall am Ausgang der Stromversorgungseinrichtung, d.h. insbesondere bei Kurzschluß der Sekundärwicklung, der maximale Ausgangsstrom wesentlich größer wird als bei Dimensionierung auf eine kleine Dämpfung, da die Zeitspannung, während der der Schalttransistor eingeschaltet ist, mit zunehmender Dämpfung vergrößert wird. Dies hat zur Folge, daß der Schalttransistor und auch die übrigen Leistungsbauteile, wie z.B. der Transformator und an dessen Sekundärwicklung angeschlossene Schaltungselemente, thermisch stark beansprucht werden. Eine beispielsweise mit der Sekundärwicklung des Transformators verbundene Strombegrenzungsanordnung könnte hier gegebenenfalls Abhilfe schaffen, stellt jedoch einen unerwünscht hohen Aufwand an Bauteilen dar. Dabei vergrößert sich der Aufwand, je größer die von der Stromversorgungseinrichtung abzugebende Spannung gewählt ist.

Die Erfindung hat die Aufgabe, eine Stromversorgungseinrichtung der eingangs genannten Art in der Weise auszubilden, daß trotz hoher Dämpfung für Störspannungen kurze Einschaltdauern für den Schalttransistor und damit eine geringe thermische Beanspruchung im Überlastfall erreicht werden.

Diese Aufgabe wird erfindungsgemäß bei einer Stromversorgungseinrichtung der gattungsgemäßen Art dadurch gelöst, daß parallel zum Eingangswiderstand eine Diode angeordnet ist und daß der Ohm'sche Widerstand der Diode zusammen mit der Kapazität eine kleinere Zeitkonstante bildet als der Eingangswiderstand mit der Kapazität.

Durch die Erfindung wird mit sehr einfachen Schaltungsmaßnahmen erreicht, daß beim Normalbetrieb der Stromversorgungseinrichtung, d.h. wenn die Spannung an der Strommeßimpedanz den Grenzwert noch nicht überschreitet und somit der Strom in der getakteten Schalteinrichtung noch geringer ist als ein korrespondierender Grenzwert, der Eingangswiderstand zusammen mit der Kapazität eine Konstante bildet, die hinreichend groß ist, um hochfrequente Störungen, insbesondere parasitäre Spannungsspitzen durch Schaltvorgänge oder dergleichen, wirksam zu bedämpfen. Insbesondere die genannten parasitären Spannungsspitzen, die vorzugsweise bei geringen Strömen durch die Induktivität und die Schalteinrichtung, d.h. bei geringer Belastung der Stromversorgungseinrichtung nahe des Leerlaufes, im Verhältnis zum gesamten Strom durch die Induktivität und die Schalteinrichtung groß sind, werden in diesem Betriebszustand wirksam unterdrückt und können so nicht mehr zu einer Instabilität der Stromversorgungseinrichtung führen.

Im Falle hoher Ströme durch die Induktivität und die Schalteinrichtung und damit auch durch die Strommeßimpedanz wird an letzterer eine höhere Spannung auftreten. Diese führt dazu, daß die Diode, die dem Eingangswiderstand parallelgeschaltet ist, leitend wird, Der Ohm'sche Widerstand der Diode im leitenden Zustand ist jedoch wesentlich geringer als der Eingangswiderstand, so daß sich im Zusammenwirken mit der Kapazität eine kleinere Zeitkonstante ergibt. Damit wird zwar in diesem Betriebsfall auch die Dämpfung der parasitären Spannungsspitzen verringert, jedoch ist dies bedeutungslos. Dagegen wird durch die kleine Zeitkonstante der Kombination aus der leitenden Diode und der Kapazität eine wesentlich verringerte Verzögerung bei der Ansteuerung der Steuerschaltung durch die an der Strommeßimpedanz auftretende Spannung erreicht, wodurch wiederum die Zeitdauer zwischen dem Einschalten der Schalteinrichtung und ihrem Wiederabschalten deutlich verringert werden kann. So kann beispielsweise auch im beschriebenen Betriebsfall die Steuerschaltung die getaktete Schalteinrichtung weiterhin mit der für Normalbetrieb vorgesehenen Taktfrequenz periodisch einschalten, und durch die mit sehr geringer Zeitverzögerung über die Diode und dem Kondensator an die Steuerschaltung zurückgekoppelte Spannung an der Strommeßimpedanz wird die Schalteinrichtung von der Steuerschaltung sehr schnell wieder ausgeschaltet, bis sie zu Beginn der nächsten Taktperiode wieder eingeschaltet wird. Auf diese Weise läßt sich ohne weitere Maßnahmen eine gute Überlastungsfestigkeit der Stromversorgungseinrichtung bei sehr wirtschaftlicher Dimensionierung der Bauteile, insbesondere der Induktivität, der Schalteinrichtung und der Strommeßimpedanz, erzielen.

Gemäß einer Ausgestaltung der erfindungsgemäßen Stromversorgungseinrichtung ist die Induktivität als Primärwicklung eines Transformators ausgebildet, deren Sekundärwicklung mit einer Last verbindbar ist. Vorteilhaft entspricht dabei der vorgegebene Grenzwert der Spannung an der Strommeßimpedanz einem Nennbetriebszustand der Stromversorgungseinrichtung, in dem die Sekundärwicklung mit einer Nennlast verbunden ist. Bei Belastung der Stromversorgungseinrichtung mit einer elektrischen Leistung bis hinauf zu der Nennlast entsprechenden Leistung ist dann die Diode gesperrt, und in der Stromversorgungseinrichtung ist für die Steuerschaltung die durch den Eingangswiderstand und die Kapazität gebildete, größere Zeitkonstante wirksam. Überschreitet die von der Last aufgenommene bzw. von der Stromversorgungseinrichtung abzugebende Leistung den der Nennlast entsprechenden Wert, wie dies bevorzugt bei einem Kurzschluß der Sekundärwicklung der Fall ist, wird die Diode in den leitenden Zustand überführt und die Steuerschaltung mit der kleineren Zeitkonstanten aus dem Ohm'schen Widerstand der Diode und der Kapazität gesteu ert. Bei einer Ausbildung der Stromversorgungseinrichtung mit einer Sekundärwicklung der beschriebenen Art und gegebenenfalls einer damit verbundenen Gleichrichter- und Spannungsglättungseinrichtung (z.B. Diode, Kondensator) erstreckt sich die durch die Erfindung mögliche Verringe rung des geringeren Schaltungsaufwandes für geringere thermische Belastung auch auf diese Sekundärwicklung und die mit ihr verbundenen Elemente.

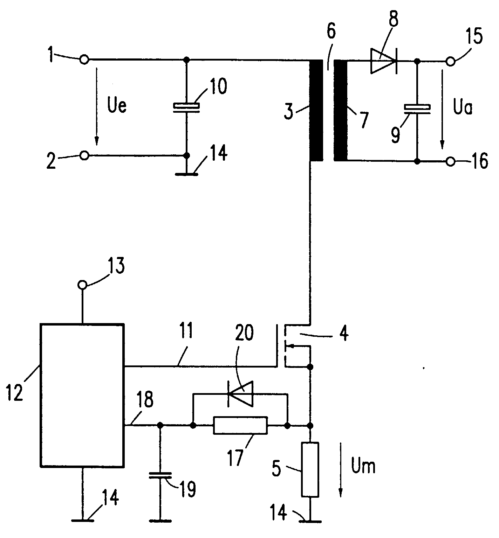

Ein Ausführungsbeispiel der Erfindung ist in der Zeichnung dargestellt und im folgenden näher beschrieben. Die gezeigte Stromversorgungseinrichtung, von der zur Vereinfachung nur die im Zusammenhang mit der vorliegenden Erfindung wichtigen Elemente schematisch dargestellt sind, umfaßt zwischen zwei mit einer Versorgungsspannung beaufschlagbaren Anschlüssen 1 und 2 eine Reihenschaltung aus einer Induktivität 3, einer Schalteinrichtung 4 und einer Strommeßimpedanz 5. Im vorliegenden Beispiel wird die Schalteinrichtung 4 durch einen Feldeffekttranssistor und die Strommeßimpedanz 5 durch einen Ohm'schen Widerstand gebildet; es sind jedoch auch abweichende Ausgestaltungen möglich. Beispielsweise kann eine nicht rein Ohm'sche Strommeßimpedanz einen von der einfachen Linearität abweichenden Zusammenhang zwischen dem Strom durch die Induktivität 3 und die Schalteinrichtung 4 und der an der Strommeßimpedanz 5 auftretenden Spannung ergeben, je nachdem, ob und in welchem Maße dies erwünscht ist.

Im vorliegenden Beispiel wird die Induktivität 3 durch die Primärwicklung eines Transformators 6 gebildet, dessen Sekundärwicklung 7 mit einer Reihenschaltung aus einem Gleichrichter 8 und einem Glättungskondensator 9 verbunden ist. Ein weiterer Glättungskondensator 10 ist zwischen den beiden Anschlüssen 1 und 2 angeordnet und dient zum Glätten der über diese Anschlüsse 1 und 2 zugeführten Versorgungsspannung bzw. zur Speicherung von Energie, die mit dieser Versorgungsspannung zugeführt. Im Ausführungsbeispiel sind weiterhin der zweite Anschluß 2 und die Strommeßimpedanz 5 an Masse gelegt.

Im Betrieb der dargestellten Stromversorgungseinrichtung wird die Schalteinrichtung 4 von einer mit ihrem Steueranschluß 11 verbundenen Steuerschaltung 12 gemäß einem hochfrequenten Steuersignal abwechselnd in einen leitenden und einen gesperrten Zustand geschaltet. Der Steueranschluß 11 wird im dargestellten Beispiel von einem Gate-Anschluß des die Schalteinrichtung 4 bildenden Feldeffekttransistors dargestellt. Die Steuerschaltung 12 weist einen Versorgungsspannungsanschluß 13 auf, über den sie aus einer nicht näher dargestellten Einrichtung mit elektrischer Energie versorgt wird. Andererseits ist die Steuerschaltung 12 ebenfalls mit Masse 14 verbunden.

Im Betrieb der dargestellten Stromversorgungseinrichtung wird dieser an ihren Anschlüssen 1, 2 die Versorgungsspannung Ue zugeführt. Durch das wechselweise Ein- und Ausschalten der Schalteinrichtung 4 werden in der Induktivität 3 Stromimpulse erzeugt, die in die Sekundärwicklung 7 des Transformators 6 übertragen und durch den Gleichrichter 8 gleichgerichtet werden. Am Glättungskondensator 9 kann dann eine Ausgangsspannung Ua abgegriffen und einer mit Anschlüssen 15, 16 des Glättungskondensators 9 verbundenen, jedoch in der Zeichnung nicht dargestellten Last zugeführt werden. Durch die Stromimpulse, die auch in der Strommeßimpedanz 5 fließen, wird an dieser eine Spannung Um auftreten, deren Augenblickswert proportional zu dem Strom ist.

Der Verbindungspunkt zwischen der Schalteinrichtung 4 und der Strommeßimpedanz 5 ist über einen Eingangswiderstand 17 mit einem Eingang 18 der Steuerschaltung 12 verbunden. über den Eingangswiderstand 17 wird somit die an der Strommeßimpedanz 5 auftretende Spannung Um der Steuerschaltung 12 zugeführt. Übersteigt der Augenblickswert der Spannung am Eingang 18 und damit der Augenblickswert der Spannung Um einen vorgegebenen Grenzwert, schaltet die Steuerschaltung über den Steueranschluß 11 die Schalteinrichtung 4 ab und unterbricht somit den Strom durch die Induktivität 3. Dieser vorgang wiederholt sich in jedem Schaltzyklus der Schalteinrichtung 4. Übersteigt dabei die Spannung am Eingang 18, d.h. entsprechend die Spannung Um an der Strommeßimpedanz 5, den vorgegebenen Grenzwert, wird die Schalteinrichtung 4 über den Steueranschluß 11 von der Steuerschaltung 12 für den aktuellen Schaltzyklus unmittelbar wieder abgeschaltet. Dieser Vorgang wiederholt sich in jedem Schaltzyklus. Bei einer Überlastung, d.h. wenn die Spannung Um den vorgegebenen Grenzwert überschreitet, wird somit die Schalteinrichtung 4 nur für sehr kurze Zeitspannen leitend. Damit werden die Elemente der dargestellten Stromversorgungseinrichtung, insbesondere der Transformator 6, die Schalteinrichtung 4, die Strommeßimpedanz 5 und der Gleichrichter 8, gegen thermische Überlastung geschützt.

Zwischen dem Eingang 18 der Steuerschaltung 12 und Masse 14 ist dabei außerdem eine Kapazität 19 angeordnet, die mit dem Eingangswiderstand 17 einen RC-Tiefpaß bildet, der eine bestimmte Zeitkonstante aufweist und zur Unterdrückung hochfrequenter Störungen und Spannungsspitzen in der Spannung Um dient, die anderenfalls zu einer Fehlaussteuerung der Steuerschaltung 12 über den Eingang 18 führen könnten. Dies könnte zu Instabilitäten im Betrieb der Stromversorgungseinrichtung führen. Aufgrund dieses RC-Tiefpasses aus dem Eingangswiderstand 17 und der Kapazität 19 folgt die Spannung am Eingang 18 jedoch nicht unmittelbar dem Verlauf der Spannung Um, sondern tritt ihr gegenüber etwas verzögert und mit "weicheren" Übergängen auf. Dadurch wird die Steuerschaltung 12 auch die Schalteinrichtung 4 über den Steueranschluß 11 verzögert abschalten, wenn die Spannung Um den vorgegebenen Grenzwert überschreitet. Im Falle einer Überlastung - im Grenzfall eines Kurzschlusses - fließt somit durch die Induktivität 3, die Schalteinrichtung 4 und die Strommeßimpedanz 5 ein hoher Strom, der eine hohe thermische Belastung dieser Bauteile bewirkt. Da der Strom auch in die Sekundärwick lung 7 des Transformators 6 transformiert wird, werden auch diese Sekundärwicklung 7 sowie der Gleichrichter 8 und gegebenenfalls der Glättungskondensator 9 und eine mit ihm verbundene, nicht dargestellte Last thermisch stark beansprucht.

Zur Vermeidung dieser Belastung, die eine aufwendigere Ausführung der genannten Elemente erzwingt und sogar zu deren Zerstörung führen kann, umfaßt die dargestellte Ausführungsform der erfindungsgemäßen Stromversorgungseinrichtung eine parallel zum Eingangswiderstand 17 geschaltete Diode 20, deren Anode mit der Strommeßimpedanz 5 und deren Kathode mit dem Eingang 18 verbunden ist. Die Diode 20 und der Eingangswiderstand 17 sind nun derart dimensioniert, daß bei Spannungen Um, die unterhalb des genannten Grenzwertes liegen oder gerade diesem entsprechen, also bei Belastungen der Stromversorgungseinrichtung bis zur Nennlast, die Diode 20 im gesperrten Zustand bleibt und somit unwirksam ist. Erst bei Überschreiten des genannten Grenzwertes durch die Augenblickswerte der Spannung Um wird die Diode 20 in den leitenden Zustand überführt. Ihr Ohm'scher Widerstand in diesem leitenden Zustand ist nun wesentlich geringer bemessen als der Ohm'sche Widerstand des Eingangswiderstands 17. Damit wird im Falle der Überlast zwischen der Strommeßimpedanz 5 und dem Eingang 18 der Steuerschaltung 12 ein RC-Tiefpaß aus dem Ohm'schen Widerstand der Parallelschaltung zwischen der Diode 20 und dem Eingangswiderstand und der Kapazität 17 und der Kapazität 19 wirksam, dessen Zeitkonstante kleiner, bevorzugt wesentlich kleiner, als die Zeitkonstante der Kombination aus dem Eingangswiderstand 17 allein und der Kapazität 19 ist. Dadurch wird die Schaltverzögerung für die Schalteinrichtung 4 merklich verkürzt, die Zeitintervalle, in denen der hohe Strom im Falle der Überlast fließt, werden wesentlich verkürzt. Der Transformator 6, die Schalteinrichtung 4, die Strommeßimpedanz 5, der Gleichrichter 8 und gegebenenfalls die daran angeschlossenen, weiteren Elemente können wesentlich kostengünstiger ausgelegt werden.

Mit dieser Schaltungsanordnung werden die Vorteile der Störsicherheit bei geringer Belastung der Stromversorgungseinrichtung mit dem Vorteil hoher Überlast- und Kurzschlußfestigkeit in schaltungstechnisch sehr einfacher Weise miteinander verbunden. Andererseits wird bei auch sehr kleinen Strömen durch die Induktivität 3, bei sehr geringer Belastung der Stromversorgungseinrichtung, eine wirksame Unterdrückung der dann im Verhältnis zum gesamten Strom durch die Induktivität 3 besonders dominierenden parasitären Spannungsspitzen ermöglicht, andererseits wird die Schaltgeschwindigkeit bei hohen Belastungen nicht eingeschränkt, sondern die Schalteinrichtung 4 bei Über last in jedem Schaltzyklus nur in sehr kurzen Stromstößen beaufschlagt und damit nur gering belastet.

Ein bevorzugtes Anwendungsgebiet der erfindungsgemäßen Stromversorgungseinrichtung besteht im Einsatz pulsweitenmodulierender Steuerschaltungen.

## Patentansprüche

1. Stromversorgungseinrichtung mit einer zwischen zwei mit einer Versorgungsspannung (Ue)beaufschlagbaren Anschlüssen (1,2) angeordneten Reihenschaltung aus einer Induktivität (3), einer von einer Steuerschaltung (12) getakteten Schalteinrichtung (4) und einer Strommeßimpedanz (5), mit einem Eingangswiderstand (17), über den eine an der Strommeßimpedanz (5) auftretende Spannung (Um) einem Eingang (18) der Steuerschaltung (12) zum Steuern der Schalteinrichtung (4) zuführbar ist, und mit einer Kapazität (19) parallel zum Eingang (18) der Steuerschaltung (12),
dadurch gekennzeichnet, daß parallel zum Eingangswiderstand (17) eine Diode (20) angeordnet ist und daß der Ohm'sche Widerstand der Diode (20) zusammen mit der Kapazität (19) eine kleinere Zeitkonstante bildet als der Eingangswiderstand (17) mit der Kapazität (19).

2. Stromversorgungseinrichtung nach Anspruch 1,
dadurch gekennzeichnet, daß die Induktivität (3) als Primärwicklung eines Transformators (6) ausgebildet ist, deren Sekundärwicklung (7) mit einer Last verbindbar ist.

3. Stromversorgungseinrichtung nach einem der vorhergehenden Ansprüche,
dadurch gekennzeichnet, daß die Diode (20) in den leitenden Zustand überführbar ist, wenn die Sekundärwicklung (7) kurzgeschlossen ist.

## Claims

1. A power supply device comprising a series arrangement of an inductance (3), a switching device (4) clocked by a control circuit (12), and a current measuring impedance (5), which series arrangement is arranged between two terminals (1, 2) to which a supply voltage (Ue) can be applied, an input resistor (17) via which a voltage (Um) appearing across the current measuring impedance (5) can be applied to an input (18) of the control circuit (12) to control the switching device (4), and a capacitance (19) in parallel with the input (18) of the control circuit (12),
characterized in that a diode (20) is arranged in parallel with the input resistor (17) and in that the ohmic resistance of the diode (20) together with the capacitance (19) forms a smaller time constant than the input resistor (17) with the capacitance (19).

2. A power supply device as claimed in Claim 1,
characterized in that the inductance (3) is formed by the primary winding of a transformer (6) whose secondary winding (7) is arranged to be connected to a load.

3. A power supply device as claimed in any one of the preceding Claims,
characterized in that the diode (20) can be driven into conduction when the secondary winding (7) is short-circuited.

## Revendications

1. Dispositif d'alimentation en courant avec un montage en série d'une inductance (3), d'un dispositif de commutation (4) cadencé par un circuit de commande (12) et d'une impédance de mesure de courant (5) disposé entre deux bornes (1, 2) susceptibles d'être alimentées en une tension d'alimentation (Ue), avec une résistance d'entrée (17) par l'intermédiaire de laquelle une tension (Um) présente à hauteur de l'impédance de mesure de courant (5) peut être amenée à une entrée (18) du circuit de commande (12) en vue de la commande du dispositif de commutation (4) et avec une capacité (19) parallèle à l'entrée (18) du circuit de commande (12),
caractérisé en ce qu'une diode (20) est disposée parallèlement à la résistance d'entrée (17) et que la résistance ohmique de la diode (20) forme avec la capacité (19) une constante temporelle inférieure à la résistance d'entrée (17) avec la capacité (19).

2. Dispositif d'alimentation en courant selon la revendication 1,
caractérisé en ce que l'inductance (3) est conçue comme l'enroulement primaire d'un transformateur (6) dont l'enroulement secondaire (7) peut être relié à une charge.

3. Dispositif d'alimentation en courant selon l'une des revendications précédentes,
caractérisé en ce que la diode (20) peut être amenée à l'état conducteur lorsque l'enroulement secondaire (7) est court-circuité.
